# EUROPÄISCHE PATENTSCHRIFT

(11) **EP 1 066 757 B1**
(45) Veröffentlichungstag und Bekanntmachung des Hinweises auf die Patenterteilung: **17.03.2004**
(21) Anmeldenummer: 00113623.3
(22) Anmeldetag: 28.06.2000
(51) Int. Cl.: A01M 7/00

(54) **Teilbreitenbereichsleitung einer Spritzleitung einer Landwirtschaftlichen Feldspritze**
Sectors-spray duct of an agricultural field sprayer
Conduite de pulvérisation d'un pulvérisateur agricole pour secteurs

(30) Priorität: 09.07.1999 DE 19932000
(43) Veröffentlichungstag der Anmeldung: 10.01.2001
(73) Patentinhaber: Amazonen-Werke H. Dreyer GmbH & Co. KG, 49205 Hasbergen (DE)
(72) Erfinder: Oberheide, Friedrich, 49143 Bissendorf (DE); Ehlen, Volker, 29485 Lemgow (DE)

(56) Entgegenhaltungen:
- DE-A- 3 341 967
- US-A- 3 777 987
- US-A- 5 221 158

## Beschreibung

Die Erfindung betrifft eine Teilbreitenbereichsleitung gemäß des Oberbegriffes des Patentanspruches 1, wie aus DE-A-3 401 734 bekannt.

Die einzelnen Teilbreitenbereichsleitungen einer Spritzleitung einer landwirtschaftlichen Feldspritze werden üblicher Weise von einer Stelle aus versorgt. Die Durchmesser der einzelnen Teilbreitenbereichsleitungen sind über die gesamte Länge gleich, von denen in gleichmäßigen Abständen Abzweigleitungen, an welchen sich Düsen oder Schleppschläuche anschließen, abzweigen. Die Fließgeschwindigkeit innerhalb der Teilbreitenbereichsleitungen nimmt ausgehend von der Einspeisstelle von Abzweigleitung zu Abzweigleitung ab, so daß insbesondere an den von der Einspeisleitung entfernteren Ende der Spritzleitung keine ausreichende Fließgeschwindigkeit mehr vorhanden ist, so daß sich die schwereren Teile der Spritzbrühe absetzen. Hierdurch besteht eine Verstopfungsgefahr.

Der Erfindung liegt die Aufgabe zugrunde, eine möglichst hohe und gleiche Strömungsgeschwindigkeit über die gesamte Länge der Teilbreitenbereichsleitung zu gewährleisten, um insbesondere Ablagerungen in den Leitungen zu vermeiden.

Diese Aufgabe wird erfindungsgemäß dadurch gelöst, daß der Querschnitt der Teilbreitenbereichsleitung von der Einspeisestelle kontinuierlich und/oder stufenweise in Richtung der der Einspeisestelle abgewandten Seite abnimmt. In Folge dieser Maßnahme wird eine annähernd gleiche Strömungsgeschwindigkeit in über die gesamte Länge der Teilbreitenbereichsleitung erreicht, so daß Ablagerungen vermieden werden. Darüber hinaus ergibt sich ein äußerst geringes Totvolumen. Auch ist die Spritzflüssigkeit schneller an der "entferntesten" Abzweigleitung bzw. Düse oder Schleppschlauch.

In einfacher Weise läßt sich die kontinuierliche bzw. stufenweise Abnahme des Querschnittes der Teilbreitenbereichsleitung dadurch erreichen, daß der Querschnitt der Teilbreitenbereichsleitung von der Einspeisestelle ausgehend an die Durchflußmenge angepaßt kontinuierlich oder stufenweise verjüngend ausgebildet ist.

In einer bevorzugten Ausführung ist vorgesehen, daß der Querschnitt der Teilbreitenbereichsleitung an jeder Stelle zumindest annähernd mit der Größe der Durchflußmenge an der betreffenden Stelle im gleichen Verhältnis zueinander steht.

Weitere Einzelheiten der Erfindung sind der Beispielsbeschreibung und den Zeichnungen zu entnehmen. Hierbei zeigen
- Fig.1: eine Teilbreitenbereichsleitung gemäß des Standes der Technik und
- Fig.2: eine Teilbreitenbereichsleitung nach der Erfindung.

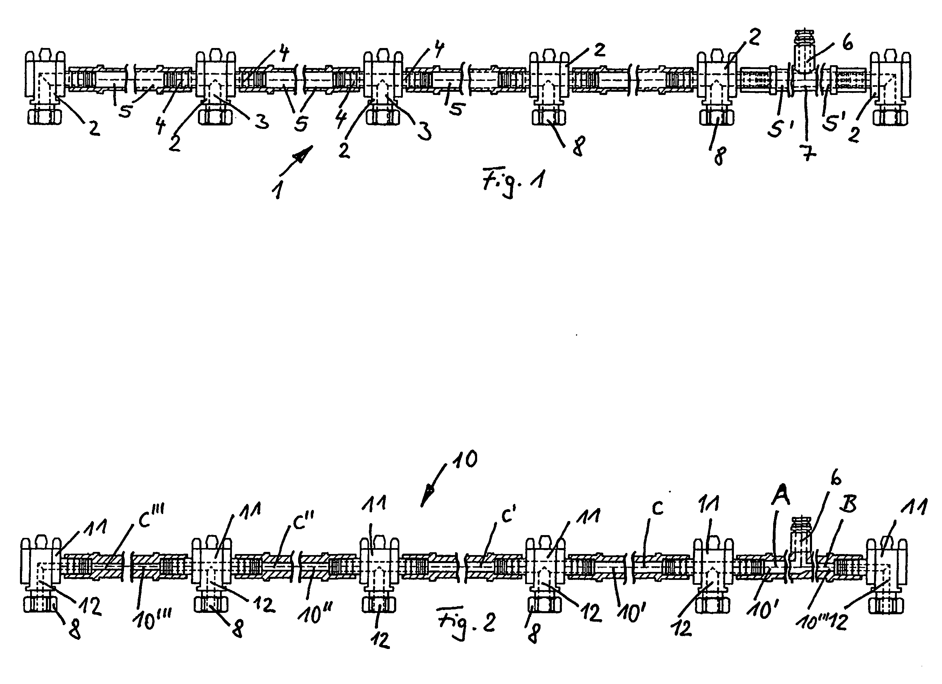

Die Teilbreitenbereichsleitung 1 gemäß Fig.1 weist die einzelnen Abzweigstücke 2 mit den Abzweigleitungen 3 und Anschlußstutzen 4 auf, welche über die einzelnen Rohrleitungsabschnitte 5 miteinander verbunden sind. Zu Beginn der Teilbreitenbereichsleitung 1 ist in dem Abschnitt 5' die Einspeisleitung 6 als T-Stück 7 angeordnet. Dieses T-Stück ist über eine nicht dargestellte Leitung mittels einer Verbindungsleitung an die Dosierarmatur einer Feldspritze angeordnet, über welche die auszubringende Flüssigkeit in die Teilbreitenbereichsleitung 1 eingespeist wird. Die einzelnen Abzweigstücke 2 weisen die Abzweigleitungen 3 auf, an welche in bekannter und daher nicht näher dargestellter Weise über die Kupplungselemente 8 Schleppschläuche oder Düsen angeordnet werden. Wie leicht der Zeichnung gemäß Fig.1 zu entnehmen ist, weist die Teilbreitenbereichsleitung 1 in sämtlichen Bereichen den gleichen Querschnitt auf.

Die Teilbreitenbereichsleitung 10 gemäß Fig.2 weist wiederum die einzelnen Abzweigstücke 11 auf, die die Abzweigleitungen 12 aufweisen, an welche mittels der Kupplungselemente 8 Schleppschläuche oder Düsen angeordnet werden. Die Teilbreitenbereichsleitung 10 weist im Bereich der Einspeisestelle 13 den größten Querschnitt A auf, wie Fig. 2 zeigt. Der Querschnitt B, zu der Seite, an welche nur eine Abzweigleitung 12 angeordnet ist, ist kleiner als der Querschnitt C der Leitungen, die zu der anderen Seite zu den übrigen Abzweigleitungen 12 führt. Wie der Fig.2 zu entnehmen ist, nimmt der Querschnitt C, C', C", C''' der einzelnen Teilstücke 10', 10", 10''' der Teilbreitenbereichsleitung zwischen den einzelnen Abzweigleitungen 12 stufenweise ab. Somit verjüngt sich die Teilbreitenbereichsleitung 10 von Abzweigleitung 12 zu Abzweigleitung 12 stufenweise. Es ist auch möglich, es ist jedoch nicht dargestellt, daß der Querschnitt der Teilbreitenbereichsleitung 10 sich kontinuierlich verjüngt.

Der Querschnitt der Teilbreitenbereichsleitung 10 ist an jeder Stelle stufenweise zumindest annähernd so ausgebildet, daß der Querschnitt der Teilbreitenbereichsleitung 10 an jeder Stelle zumindest annähernd mit der Größe der Durchflußmenge an der betreffenden Stelle im gleichen Verhältnis zueinander steht.

## Patentansprüche

1. Teilbreitenbereichsleitung einer Spritzleitung einer landwirtschaftlichen Feldspritze mit in der Teilbreitenbereichsleitung in gleichmäßigen Abstand beabstandet zueinander angeordnet Abzweigleitungen, an welchen sich Düsen oder Schleppschläuche anschließen und die über eine Zuleitung gespeist wird, **dadurch gekennzeichnet, daß** der Querschitt der Teilbreitenbereichsleitung (10) von der Einspeisestelle (6) kontinuierlich und / oder stufenweise in Richtung der der Einspeisestelle (6) abgewandten Seite abnimmt.

2. Teilbreitenbereichsleitung nach Anspruch 1, **dadurch gekennzeichnet, daß** der Querschnitt der Teilbreitenbereichsleitung (10) von der Einspeisestelle (6) ausgehend an die Durchflußmenge angepaßt verjüngend ausgebildet ist.

3. Teilbreitenbereichsleitung nach einem oder mehreren der vorstehenden Ansprüche, **dadurch gekennzeichnet, daß** der Querschnitt der Teilbreitenbereichsleitung (10) an jeder Stelle zumindest annähernd mit der Größe der Durchflußmenge an der betreffenden Stelle im gleichen Verhältnis steht.

## Claims

1. Partial width duct of a spray line of an agricultural crop sprayer having branch lines disposed at regular spacings one from another in the partial width duct, to which branch lines nozzles or trailing hoses are connected, said partial width duct being supplied by a supply line, **characterised in that** the cross-section of the partial width duct (10) reduces continuously and/or in stages from the feed point (6) towards the side remote from the feed point (6).

2. Partial width duct according to claim 1, **characterised in that** the cross-section of the partial width duct (10), conforming to the quantity of flow, is configured so as to taper from the feed point (6).

3. Partial width duct according to one or more of the preceding claims, **characterised in that** the cross-section of the partial width duct (10) at each point has at least approximately the same ratio as the size of the quantity of flow at the relevant point.

## Revendications

1. Conduite de pulvérisation d'un pulvérisateur agricole sectorielle, comprenant des lignes en dérivation disposées dans la conduite de pulvérisation à distance égale les unes par rapport aux autres, auxquelles sont raccordé(e)s des buses ou flexibles de traîne et qui est alimentée par une conduite d'alimentation,
**caractérisée en ce que**
la section de la conduite de pulvérisation (10) diminue continuellement et/ou graduellement depuis le poste d'alimentation (6) dans la direction du côté opposé au poste d'alimentation (6).

2. Conduite de pulvérisation sectorielle selon la revendication 1,
**caractérisée en ce que**
la section de la conduite de pulvérisation (10) est configurée de façon à se rétrécir à partir du poste d'alimentation (6) et à être adaptée au débit.

3. Conduite de pulvérisation sectorielle selon l'une quelconque des revendications précédentes,
**caractérisée en ce que**
la section de la conduite de pulvérisation (10) a pour chaque poste le même rapport au moins approximativement avec la grandeur du débit du poste respectif.
